# EUROPEAN PATENT APPLICATION

(11) **EP 4 571 365 A1**
(43) Date of publication of application: **18.06.2025**
(21) Application number: 22954828.4
(22) Date of filing: 09.12.2022
(51) Int. Cl.: G01V 1/28

(54) **MULTI-WAVE MULTI-DOMAIN ADAPTIVE SEISMIC HORIZON AUTO-TRACKING METHOD AND DEVICE**

(30) Priority: 08.08.2022 CN 202210943651
(71) Applicant: China National Petroleum Corporation, Beijing 100007 (CN); BGP Inc., China National Petroleum Corporation, Hebei 072751 (CN); CNPC Exploration Software Co., Ltd, Beijing 100080 (CN)
(72) Inventor: CHEN, Maoshan, Beijing 100724 (CN); SONG, Qianggong, Beijing 100724 (CN); DENG, Li, Beijing 100724 (CN); LI, Hong, Beijing 100724 (CN); LIU, Youfa, Beijing 100724 (CN)
(74) Representative: IP TRUST SERVICES
(86) International application number: PCT/CN2022/137926
(87) International publication number: WO 2024/031890

(57) **Abstract**

The present disclosure provides a multi-wave and multi-domain adaptive seismic horizon auto-tracking method and apparatus. The multi-wave and multi-domain adaptive seismic horizon auto-tracking method comprises: importing seismic data, and setting a seed point on the seismic data; determining a seismic relative resolution according to a seismic waveform of a seismic trace where the seed point is located; determining horizon tracking parameters according to the seismic relative resolution; determining a horizon point according to the horizon tracking parameters and the seismic trace where the seed point is located; replacing the seed point with the horizon point, and performing corresponding iterative calculation to obtain a plurality of horizon points in one-to-one correspondence with the seismic traces in the seismic data; and combining horizon values corresponding to the plurality of horizon points into seismic horizon data and exporting the seismic horizon data. According to the present disclosure, the precision and adaptability of horizon auto-tracking of different types of seismic data can be significantly improved.

## Description

### TECHNICAL FIELD

The present disclosure relates to the technical field of seismic data interpretations, and particularly to a multi-wave and multi-domain adaptive seismic horizon auto-tracking method and apparatus.

### BACKGROUND

In the seismic data, a seismic reflection event is a seismic response of a seismic reflection interface, which contains rich geological information. Since the seismic reflection interface is usually a petrophysical interface with differences of wave impedance, information of a stratigraphic sedimentary interface, a geological interface, a stratum thickness, etc. related to the petrophysical interface can be obtained by tracking the seismic event and forming a seismic horizon. Obviously, the seismic horizon is one of the most important indicators of the stratigraphic interface obtained from the seismic data.

The essence of seismic exploration is to obtain time-varying seismic waveforms, which are composed of seismic wavelets in time sequence which are reflected by a series of wave impedance interfaces, so the conventional seismic data is usually in time-domain. Influenced by the seismic exploration mechanism, original seismic horizons obtained from the seismic data are undoubtedly also in time-domain. However, influenced by geological factors such as rock physical properties of the strata such as lithology, surrounding rock pressure and rock structure, the propagation velocity of a seismic wave is varied in different strata. In addition, the types (e.g., primary wave (P-wave, Longitudinal wave), secondary wave (S-wave, transverse wave), surface wave, etc.) and properties (e.g., wavelength, frequency, energy, etc.) of the seismic waves dictate that different types of seismic waves have different propagation velocities in the same stratum, and the time spent by different types of seismic waves passing through a specific stratum and being reflected back to the ground is also different. In a certain sense, the propagation time of the seismic wave is relative. In addition, due to different types of seismic excitation devices, different precisions of seismic prospecting instruments, different seismic observation modes, etc., there are large differences in apparent resolutions of the seismic waves (mainly manifested in different dominant frequencies and bandwidths) and sampling intervals. Influenced by the above factors, the propagation velocities of the seismic waves with various types, various sources and various properties are different.

With the development of seismic exploration technologies, seismic acquisition has developed from a P-wave seismic exploration to a multi-wave and multi-component seismic exploration, and seismic processing has developed from a pre-stack/post-stack time migration to a pre-stack depth migration, which brings about the change of a perpendicular axis domain type (referred to as domain type for short, which essentially refers to a measurement scale in a gravity direction), and not only different types of time-domain seismic data but also depth-domain seismic data have appeared.

The so-called time-domain seismic data refers to seismic data in which an independent variable is time and the dependent variable is the intensity of seismic signals that vary over time. Similarly, the depth-domain seismic data refers to seismic data in which an independent variable is depth and the dependent variable is the intensity of seismic signals that vary over depth. Although seismic exploration cannot directly obtain the depth-domain seismic data, the seismic data may be converted from the time-domain to the depth-domain through complex processing. In the multi-wave and multi-component seismic exploration, the seismic wave may be further divided into P-wave, S-wave, converted wave (usually, a seismic wave is converted from P-wave to S-wave at stratigraphic reflection interfaces), etc., and the time-domain may be further divided into P-wave time-domain, an S-wave time-domain, converted wave time-domain, etc. In a seismic reflection sequence after normal time difference correction, the time and the depth as independent variables are actually the reflections of a distance (or buried depth) between the seismic reflection interface and a base level (an artificially defined horizontal reference surface located near the ground).

The burial depth information of the seismic reflection interface is obtained from the seismic data by means of horizon interpretation. There are two modes for horizon interpretation, one is manual picking, and the other is auto-tracking. The horizon auto-tracking refers to a technology of automatically identifying and marking seismic events by computers and automatically combining spatial positions thereof into a horizon. The horizon auto-tracking is one of the earliest fields of seismic interpretation automation, and the appearance of this technology has significantly improved the efficiency and precision of seismic interpretation.

Regardless of the type of the seismic data, the principles of extracting and interpreting the seismic horizon from the seismic data are substantially the same, that is, the horizon auto-tracking is based on the seismic waveform similarity. The basic flow of the horizon auto-tracking is as follows: firstly, a neighborhood range is defined around a seed point (usually called a time window for the time-domain seismic data, or a depth window for the depth-domain seismic data. For the convenience of the subsequent description, it is uniformly referred to as a time window. Thus, in the present disclosure, the term "time window" is not limited to the time-domain), and waveform feature points (peaks, troughs, or zero-crossing points) of a seismic trace adjacent to a seed seismic trace are searched within the neighborhood range. Secondly, a vertical distance or a waveform similarity between each of the searched waveform feature points and the seed point is calculated, and a waveform feature point with a highest matching degree (a maximum waveform similarity or a minimum vertical distance) is selected as a horizon point on the adjacent seismic trace. Influenced by the factors such as the seismic acquisition technology, the geophone sensitivity, the seismic recorder precision and the geological structure characteristics, the dominant frequencies of different types and different domains of seismic data defined by a seismic observation system are different, and there is a large difference in the resolution of the seismic data. In addition, due to the influence and limitation of the data storage conditions, the difference in the sampling interval of the seismic data is also large, and there is a problem of over-sampling or even under-sampling. Such differences in the resolution and the sampling interval bring great difficulty to the parameter selection during seismic horizon auto-tracking. If the horizon auto-tracking parameters are not properly set, the effect of the seismic horizon auto-tracking will be greatly affected. The size of the time window has the greatest influence on the accuracy of horizon tracking. If the time window is too small and includes too few waveform feature points, a waveform feature point with the best matching degree may be missed. If the time window is too large, the waveform feature points may be mismatched due to the periodic aliasing phenomenon caused by the narrow frequency band of the seismic data. Obviously, the critical factor influencing the precision of the horizon auto-tracking is the size of the time window during the seismic horizon auto-tracking.

### SUMMARY

A main object of the embodiments of the present disclosure is to provide a multi-wave and multi-domain adaptive seismic horizon auto-tracking method and apparatus, so as to realize adaptive horizon auto-tracking of multi-wave and multi-domain seismic data in a consistent manner without presetting the size of a search window, thereby significantly improving the precisions and adaptability of the horizon auto-tracking of different types of seismic data.

In order to achieve the above object, the embodiments of the present disclosure provide a multi-wave and multi-domain adaptive seismic horizon auto-tracking method, including:
importing seismic data, and setting a seed point on the seismic data;
determining a seismic relative resolution according to a seismic waveform of a seismic trace where the seed point is located;
determining horizon tracking parameters according to the seismic relative resolution;
determining a horizon point according to the seismic trace where the seed point is located and the horizon tracking parameters;
replacing the seed point with the horizon point, and performing corresponding iterative calculation to obtain a plurality of horizon points in one-to-one correspondence with the seismic traces in the seismic data; and
combining horizon values corresponding to the plurality of horizon points into seismic horizon data and exporting the seismic horizon data.

In an embodiment, the determining the seismic relative resolution according to the seismic waveform of the seismic trace where the seed point is located includes:
determining waveform extreme points according to the seismic waveform of the seismic trace where the seed point is located; and
determining the seismic relative resolution according to a distance between the waveform extreme points.

In an embodiment, the determining the horizon point according to the seismic trace where the seed point is located and the horizon tracking parameters includes:
determining a waveform relative time difference according to the seismic trace where the seed point is located and the horizon tracking parameters; and
determining the horizon point according to the horizon tracking parameters and the waveform relative time difference.

In an embodiment, the horizon tracking parameters comprise a waveform feature point search window and a waveform similarity window;
the determining the waveform relative time difference according to the seismic trace where the seed point is located and the horizon tracking parameters and includes:
determining an adjacent seismic trace of the seismic trace where the seed point is located as a target seismic trace;
moving the target seismic trace within the waveform feature point search window, and determining a waveform similarity between the seismic trace where the seed point is located and the target seismic trace corresponding to each movement according to the waveform similarity window to obtain a similarity sequence; and
determining a movement amount corresponding to a maximum value in the similarity sequence as the waveform relative time difference.

In an embodiment, the determining the waveform similarity between the seismic trace where the seed point is located and the target seismic trace corresponding to each movement according to the waveform similarity window includes:
determining a waveform length according to the waveform similarity window; and
determining the waveform similarity between the seismic trace where the seed point is located and the target seismic trace corresponding to each movement according to the waveform length.

In an embodiment, the horizon tracking parameters further comprise a waveform fitting window;
the determining the horizon point according to the horizon tracking parameters and the waveform relative time difference includes:
performing curve fitting on the similarity sequence in the waveform fitting window according to the waveform relative time difference to obtain a fitting curve, and determining a local maximum point of the fitting curve as the horizon point.

The embodiments of the present disclosure further provide a multi-wave and multi-domain adaptive seismic horizon auto-tracking apparatus, including:
a seed point setting module configured to import seismic data and set a seed point on the seismic data;
a seismic relative resolution analysis module configured to determine a seismic relative resolution according to a seismic waveform of a seismic trace where the seed point is located;
a horizon tracking parameter setting module configured to determine horizon tracking parameters according to the seismic relative resolution;
a horizon point determination module configured to determine a horizon point according to the seismic trace where the seed point is located and the horizon tracking parameters;
an iterative calculation module configured to replace the seed point with the horizon point, and performing corresponding iterative calculation to obtain a plurality of horizon points in one-to-one correspondence with the seismic traces in the seismic data; and
a seismic horizon data export module configured to combine horizon values corresponding to the plurality of horizon points into seismic horizon data and export the seismic horizon data.

In an embodiment, the seismic relative resolution analysis module includes:
a waveform extreme point determination unit configured to determine waveform extreme points according to the seismic waveform of the seismic trace where the seed point is located; and
a seismic relative resolution analysis unit configured to determine the seismic relative resolution according to a distance between the waveform extreme points.

In an embodiment, the horizon point determination module includes:
a waveform relative time difference calculation unit configured to determine a waveform relative time difference according to the seismic trace where the seed point is located and the horizon tracking parameters; and
a horizon point determination unit configured to determine the horizon point according to the horizon tracking parameters and the waveform relative time difference.

In an embodiment, the horizon tracking parameters comprise a waveform feature point search window and a waveform similarity window;
the waveform relative time difference calculation unit includes:
a target seismic trace determination subunit configured to determine an adjacent seismic trace of the seismic trace where the seed point is located as a target seismic trace;
a similarity calculation subunit configured to move the target seismic trace in the waveform feature point search window, determine a waveform similarity between the seismic trace where the seed point is located and the target seismic trace corresponding to each movement according to the waveform similarity window to obtain a similarity sequence; and
a waveform relative time difference calculation subunit configured to determine a movement amount corresponding to a maximum value in the similarity sequence as the waveform relative time difference.

In an embodiment, the similarity calculation subunit is configured to:
determine a waveform length according to the waveform similarity window; and
determine the waveform similarity between the seismic trace where the seed point is located and the target seismic trace corresponding to each movement according to the waveform length.

In an embodiment, the horizon tracking parameters further comprise a waveform fitting window;
the horizon point determination unit is configured to:
perform curve fitting on the similarity sequence in the waveform fitting window according to the waveform relative time difference to obtain a fitting curve, and determine a local maximum point of the fitting curve as the horizon point.

The embodiments of the present disclosure further provide an electronic device, including a memory, a processor and a computer program stored in the memory and executed on the processor, and when executing the computer program, the processor implements the steps of the multi-wave and multi-domain adaptive seismic horizon auto-tracking method.

The embodiments of the present disclosure further provide a computer-readable storage medium, storing a computer program, and when executed by a processor, the computer program implements the steps of the multi-wave and multi-domain adaptive seismic horizon auto-tracking method.

The embodiments of the present disclosure further provide a computer program product, including a computer program/instruction, and when executed by a processor, the computer program/instruction implements the steps of the multi-wave and multi-domain adaptive seismic horizon auto-tracking method.

The multi-wave and multi-domain adaptive seismic horizon auto-tracking method and apparatus according to the embodiments of the present disclosure firstly set a seed point on seismic data, determine a seismic relative resolution according to a seismic waveform of a seismic trace where the seed point is located to further obtain horizon tracking parameters, determine a horizon point according to the seismic trace where the seed point is located and the horizon tracking parameters, replace the seed point with the horizon point to perform corresponding iterative calculation, and finally combine horizon values corresponding to the plurality of horizon points into seismic horizon data and export the seismic horizon data, which can significantly improve the precision and adaptability of horizon auto-tracking of different types of seismic data.

### BRIEF DESCRIPTION OF THE DRAWINGS

In order to illustrate the technical solutions in the embodiments of the present disclosure or in the prior art more clearly, the drawings required for describing the embodiments will be briefly introduced as follows. Obviously, the drawings involved in the following description only illustrate some embodiments of the present disclosure, and persons of ordinary skill in the art can obtain other drawings from these drawings without inventive effort.
FIG. 1 illustrates a flowchart of a multi-wave and multi-domain adaptive seismic horizon auto-tracking method according to an embodiment of the present disclosure;
FIG. 2 illustrates a flowchart of a multi-wave and multi-domain adaptive seismic horizon auto-tracking method according to another embodiment of the present disclosure;
FIG. 3 illustrates a flowchart of S102 according to an embodiment of the present disclosure;
FIG. 4 illustrates a flowchart of S104 according to an embodiment of the present disclosure;
FIG. 5 illustrates a flowchart of S301 according to an embodiment of the present disclosure;
FIG. 6 illustrates a flowchart for determining a seismic relative resolution according to an embodiment of the present disclosure;
FIG. 7 illustrates a flowchart for identifying waveform extreme points according to an embodiment of the present disclosure;
FIG. 8 illustrates a schematic diagram of a seismic waveform according to an embodiment of the present disclosure;
FIG. 9 illustrates a seismic sparse pulse array obtained by normalizing seismic waveform according to an embodiment of the present disclosure;
FIG. 10 illustrates a waveform extreme point array according to an embodiment of the present disclosure;
FIG. 11 illustrates an auto-tracing effect diagram of a P-wave time-domain horizon according to an embodiment of the present disclosure;
FIG. 12 illustrates an auto-tracing effect diagram of a P-wave depth-domain horizon according to an embodiment of the present disclosure;
FIG. 13 illustrates a structural block diagram of a multi-wave and multi-domain adaptive seismic horizon auto-tracking apparatus according to an embodiment of the present disclosure; and
FIG. 14 illustrates a structural block diagram of an electronic device according to an embodiment of the present disclosure.

### DESCRIPTION OF THE EMBODIMENTS

The technical solutions in the embodiments of the present disclosure will be clearly and completely described below with reference to the drawings for the embodiments of the present disclosure. Obviously, those described are only a part, rather than all, of the embodiments of the present disclosure. Based on the embodiments of the present disclosure, any other embodiment obtained by persons of ordinary skill in the art without inventive effort should fall within the protection scope of the present disclosure.

Persons skilled in the art acquire that the embodiments of the present disclosure can be implemented as a system, an apparatus, a device, a method or a computer program product. Therefore, the present disclosure may be embodied in the forms of complete hardware, complete software (including firmware, resident software, microcode, etc.), or a combination of hardware and software.

In view of the difficulty in selecting the seismic horizon auto-tracking parameters and the unsatisfactory effect of the horizon auto-tracking due to different sampling intervals and the large difference in apparent resolutions of different sources and different types of seismic data, the embodiments of the present disclosure provide a multi-wave and multi-domain adaptive seismic horizon auto-tracking method and apparatus, so as to realize the horizon auto-tracking of multi-wave and multi-domain (time-domain, depth-domain, frequency domain, etc.) seismic data based on a relative time resolution automatic estimation technology and a time window parameter adaptive adjustment technology related to the seismic horizon auto-tracking, and automatically determine the horizon tracking parameters in a consistent manner without specifying the seismic data type and the horizon auto-tracking parameters in advance, which is suitable for not only the conventional horizon auto-tracking of two-dimensional/three-dimensional, pre-stack/post-stack seismic data, but also the automatic pick-up of seismic first arrivals and tracking of spectral tuning curves during seismic, thereby significantly improving the precisions and adaptability of the horizon auto-tracking of different types of seismic data. The present disclosure is described in detail below with reference to the drawings.

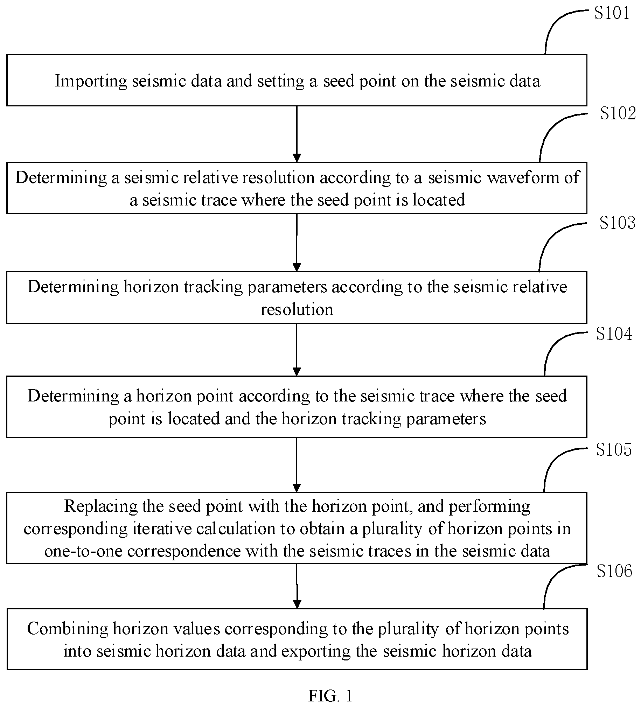

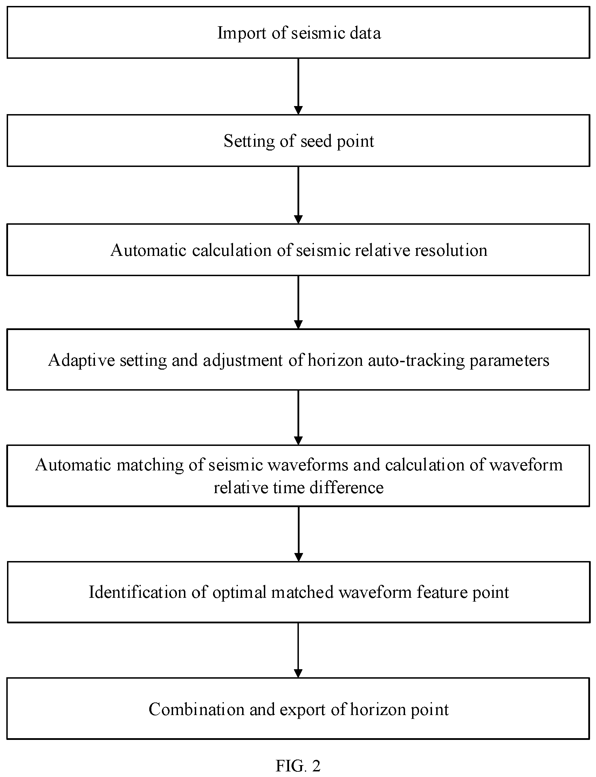

FIG. 1 illustrates a flowchart of a multi-wave and multi-domain adaptive seismic horizon auto-tracking method according to an embodiment of the present disclosure. FIG. 2 illustrates a flowchart of a multi-wave and multi-domain adaptive seismic horizon auto-tracking method according to another embodiment of the present disclosure. As illustrated in FIGS. 1 and 2, the multi-wave and multi-domain adaptive seismic horizon auto-tracking method includes:

S101: importing seismic data and setting a seed point on the seismic data.

During implementation, the seismic data may be read from an external memory and stored in a computer memory in the form of a regular array. In this embodiment, the two-dimensional seismic data is stored in the form of a two-dimensional array, and the three-dimensional seismic data is stored in the form of a three-dimensional array. Either of the two-dimensional seismic data and the three-dimensional seismic data should include at least two seismic traces, otherwise, the procedure prompts that the horizon auto-tracking cannot be performed and then exits. For example, if the seismic data is two-dimensional seismic data, the number of the seismic traces is 15, and the number of sampling points of each of the seismic traces is 131, then the two-dimensional array has a size of 15×131 (15 transversely and 131 longitudinally).

Next, one or more seed points are set at a certain point or some points in the seismic data. The seed point represents a reference point of horizon tracking and also a starting point of the horizon tracking. The seed point must be located in a three-dimensional seismic observation space (i.e., the location of the seed point cannot exceed the range of the seismic data), and at least one seed point should be set for one horizon tracking. If there is no seed point, the process of horizon tracking is exited.

S102: determining a seismic relative resolution according to a seismic waveform of a seismic trace where the seed point is located.

In this embodiment, the seismic relative resolution is a parameter that can measure a relative magnitude of a seismic resolution. In the present disclosure, the seismic relative resolution particularly refers to a vertical average distance between waveform feature points including a peak and a trough, with a unit of the number of sampling points.

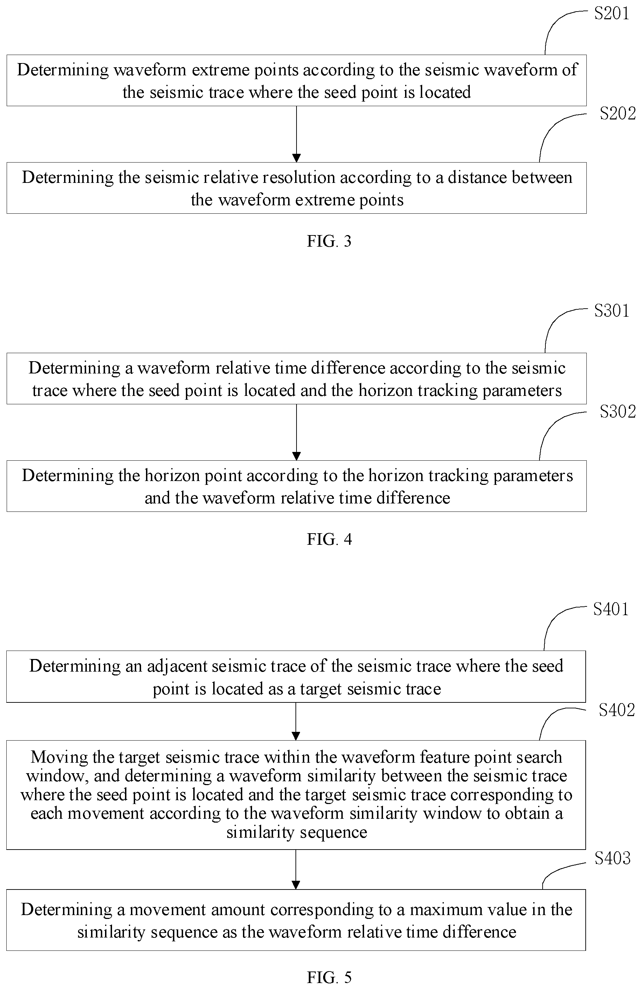

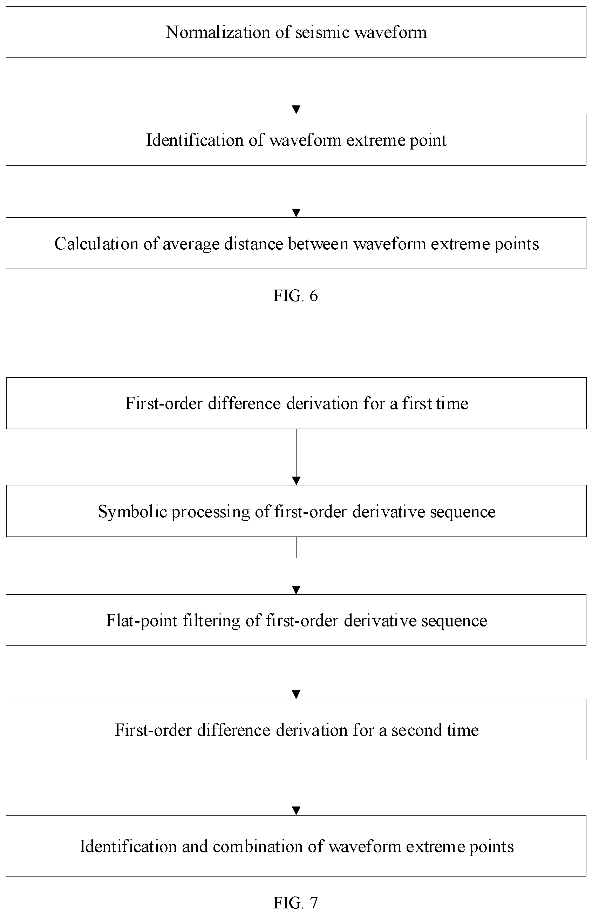

FIG. 3 illustrates a flowchart of S102 according to an embodiment of the present disclosure. FIG. 6 illustrates a flowchart for determining a seismic relative resolution according to an embodiment of the present disclosure. As illustrated in FIGS. 3 and 6, S102 includes:

S201: determining waveform extreme points according to the seismic waveform of the seismic trace where the seed point is located.

During implementation, the seismic waveform is normalized, and then a statistical time window is set, in which waveform extreme points are identified according to the waveform characteristics of the seismic trace where the seed point is located. Generally, the statistical time window is the whole seismic trace. If the seismic trace is particularly long, a part of the seismic trace may be taken as the statistical range, but the statistical time window should be ensured to have no less than 100 sampling points.

FIG. 7 illustrates a flowchart for identifying waveform extreme points according to an embodiment of the present disclosure. As illustrated in FIG. 7, the identifying waveform extreme points includes:
1. deriving the seismic waveform by using a first-order difference vector operation to obtain a first-order derivative sequence;
2. processing the first-order derivative sequence of the seismic waveform by using a symbolic operation to obtain a symbolic first-order derivative sequence;
3. flat-point filtering the symbolic first-order derivative sequence, i.e., setting all the values of points at which the symbolic first-order derivatives are zero to be the same as a gradient (trend or tendency) of a slope face where the points are located;
4. performing the first-order differential vector operation on the symbolic first-order derivative sequence again to form a second-order derivative sequence; and
5. marking a point with an amplitude of -2 in the second-order derivative sequence as a peak (local maximum value), and marking a point with an amplitude of 2 as a trough (local minimum value), and orderly combining the above points into a waveform extreme point sequence.

S202: determining the seismic relative resolution according to a distance between the waveform extreme points.

**Table 1**

| No. of extreme point | Name of extreme point | No. of sampling point corresponding to extreme point | Distance between sampling points |
|---|---|---|---|
| 1 | T1 | 685.0 | / |
| 2 | P1 | 694.0 | 9.0 |
| 3 | T2 | 709.0 | 5.0 |
| 4 | P2 | 715.0 | 6.0 |
| 5 | T3 | 720.0 | 5.0 |
| 6 | P3 | 729.0 | 9.0 |
| 7 | T4 | 735.0 | 6.0 |
| 8 | P4 | 745.0 | 10.0 |
| 9 | T5 | 755.0 | 10.0 |
| 10 | P5 | 767.0 | 12.0 |
| 11 | T6 | 775.0 | 8.0 |
| 12 | P6 | 783.0 | 8.0 |
| 13 | T7 | 790.0 | 7.0 |
| 14 | P7 | 798.0 | 8.0 |
| Average distance between extreme points (root mean square) | | | 8.1759 |

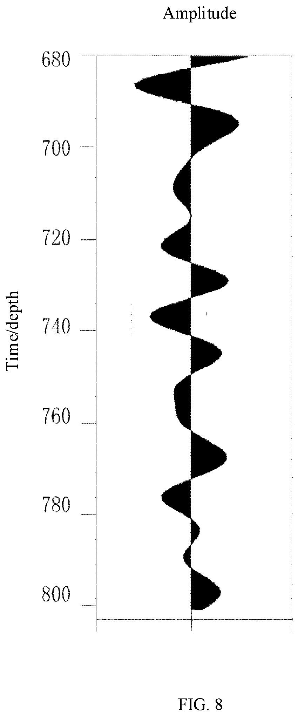

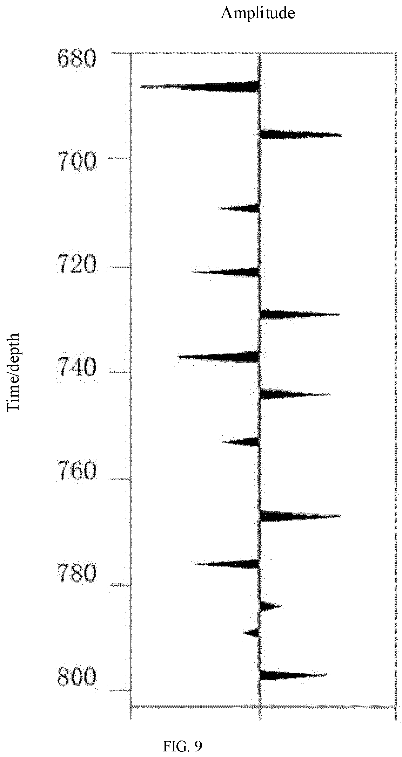

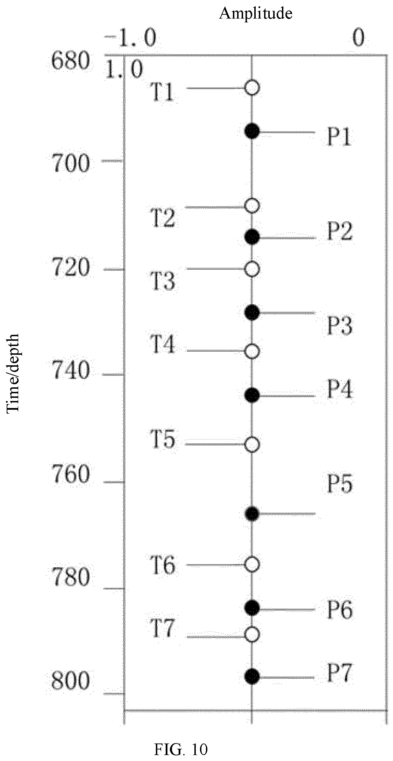

Table 1 is a schematic table of the distance between the extreme points in the embodiments of the present disclosure. FIG. 8 illustrates a schematic diagram of a seismic waveform according to an embodiment of the present disclosure. FIG. 9 illustrates a seismic sparse pulse array obtained by normalizing seismic waveform according to an embodiment of the present disclosure. FIG. 10 illustrates a waveform extreme point array according to an embodiment of the present disclosure. As shown in Table 1 and FIGS. 8 to 10, the statistical time window includes 680 to 800 sampling points, and among 121 sampling points within the statistical time window, there are totally 14 waveform extreme points (including seven peaks (numbered P1 to P7) and seven troughs (numbered T1 to T7)). Since there are 13 distances between the 14 extreme points, an average distance (seismic relative resolution) based on a root mean square algorithm is 8.1759 (in the unit of sampling point).

S103: determining horizon tracking parameters according to the seismic relative resolution.

In this embodiment, the horizon tracking parameters include a waveform feature point search window, a waveform similarity window and a waveform fitting window.

The waveform feature point search window is a parameter for searching an optimal matching point range, and is used to limit a search range of an optimal matching feature point.

The waveform similarity window is a waveform length parameter for calculating a waveform similarity. In the present disclosure, a cross-correlation coefficient is taken as a measure of the waveform similarity, so it is necessary to perform a cross-correlation operation on adjacent seismic traces, and the waveform similarity window defines the waveform length participating in the cross-correlation operation.

The waveform fitting window is a parameter of the waveform length during waveform fitting. In the present disclosure, a Gaussian function fitting algorithm is adopted to fit a waveform and calculate an extreme point of the waveform, and the extreme point is taken as an optimal matching point (horizon point). The waveform fitting window is used to control a data input range when a Gaussian function fitting is used to avoid fitting errors caused by non-Gaussian waveform characteristics.

During implementation, it may be set that the waveform feature point search window is twice the seismic relative resolution, the waveform similarity window is three times the seismic relative resolution, and the waveform fitting window is one time the seismic relative resolution. The seismic relative resolution should be calculated once every time one horizon point is tracked, so as to reflect the adaptive adjustment characteristics of the horizon auto-tracking parameters.

For example, when the seismic relative resolution is 8.1759 (in the unit of sampling point), the waveform feature point search window is 8.1759×2+1, which is rounded to be 17 (in the unit of sampling point). Similarly, the waveform similarity window is 8.1759×3+1, which is rounded to be 25 (in the unit of sampling point), and the waveform fitting window is 8.1759×1+1, which is rounded to be 9 (in the unit of sampling point).

S104: determining a horizon point according to the seismic trace where the seed point is located and the horizon tracking parameters.

FIG. 4 illustrates a flowchart of S104 according to an embodiment of the present disclosure. As illustrated in FIG. 4, S104 includes:
S301: determining a waveform relative time difference according to the seismic trace where the seed point is located and the horizon tracking parameters.

FIG. 5 illustrates a flowchart of S301 according to an embodiment of the present disclosure. As illustrated in FIG. 5, S301 includes:
S401: determining an adjacent seismic trace of the seismic trace where the seed point is located as a target seismic trace.
S402: moving the target seismic trace within the waveform feature point search window, and determining a waveform similarity between the seismic trace where the seed point is located and the target seismic trace corresponding to each movement according to the waveform similarity window to obtain a similarity sequence.

In an embodiment, the determining the waveform similarity between the seismic trace where the seed point is located and the target seismic trace corresponding to each movement according to the waveform similarity window includes:
determining a waveform length according to the waveform similarity window, and determining the waveform similarity between the seismic trace where the seed point is located and the target seismic trace corresponding to each movement according to the waveform length.

During implementation, the target seismic trace is moved up and down in the waveform feature point search window with the seismic trace where the seed point is located as the center and in the unit of sampling point, a corresponding movement amount (moved for one sampling point each time) is recorded, and the waveform similarity (i.e., the cross-correlation coefficient, which is used to indicate the similarity between two seismic waveforms) between the seismic trace where the seed point is located and the target seismic trace is obtained for each movement, thereby obtaining a similarity sequence (cross-correlation coefficient sequence).

For example, if the waveform feature point search window indicates 17, there are 17 pieces of similarity data, and the corresponding movement amounts (time shift amounts) are -8, - 7, -6, -5, -4, -3, -2, -1, 0, 1, 2, 3, 4, 5, 6, 7 and 8 respectively.

S403: determining a movement amount corresponding to a maximum value in the similarity sequence as the waveform relative time difference.

S302: determining the horizon point according to the horizon tracking parameters and the waveform relative time difference.

In an embodiment, S302 includes:
performing curve fitting on the similarity sequence in the waveform fitting window according to the waveform relative time difference to obtain a fitting curve, and determining a local maximum point of the fitting curve as the horizon point.

During implementation, curve fitting is performed on the similarity sequence according to the waveform relative time difference in the waveform fitting window centered on the seed point. During curve fitting, the similarity sequence is regarded as a Gaussian distribution waveform, the similarity sequence is fitted by a Gaussian function fitting algorithm, a local maximum point of the fitting function is calculated according to the characteristic algorithm of Gaussian function, and the local maximum point is regarded as the horizon point (or as the matched waveform feature point nearest to the horizon point). If the seed point is the peak, the local maximum point is the peak, otherwise the local maximum point is the trough. This method reduces the curve fitting errors and avoid the interference of non-Gaussian distribution characteristics of the seismic waveform on curve fitting.

S105: replacing the seed point with the horizon point, and performing corresponding iterative calculation to obtain a plurality of horizon points in one-to-one correspondence with the seismic traces in the seismic data.

During implementation, iterative calculation is performed after the seed point in S101 is replaced by the horizon point, and S101 to S105 are iteratively performed until each of the seismic traces in the seismic data has a corresponding horizon point.

S106: combining horizon values corresponding to the plurality of horizon points into seismic horizon data and export the seismic horizon data.

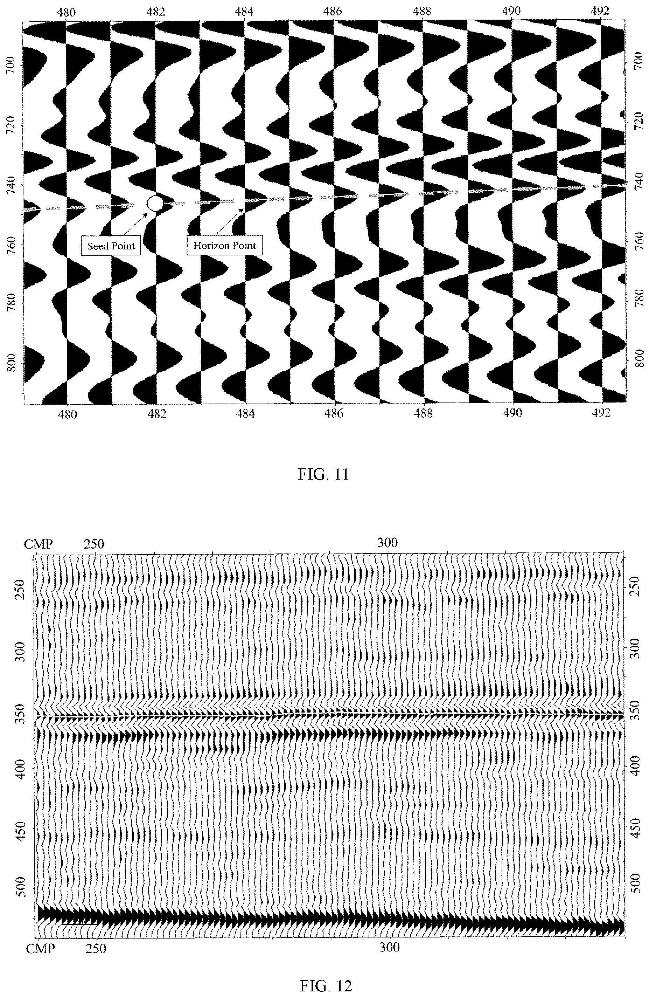

FIG. 11 illustrates an auto-tracing effect diagram of a P-wave time-domain horizon according to an embodiment of the present disclosure. FIG. 12 illustrates an auto-tracing effect diagram of a P-wave depth-domain horizon according to an embodiment of the present disclosure. In FIG. 11, the abscissa indicates a distance in meters and the ordinate indicates time in milliseconds. In FIG. 12, the abscissa indicates a distance in meters and the ordinate also indicates a distance in meters. As illustrated in FIGS. 11 and 12, the horizon values are time values or depth values of the horizon points, and are orderly combined into seismic horizon data according to the position of the serial number of the Common Middle Point (CMP) corresponding to the horizon points, to form a horizon line. In this embodiment, the seismic horizon data is a one-dimensional array or a two-dimensional array. When the seismic data is two-dimensional seismic data, the seismic horizon data is a one-dimensional array; and when the seismic data is three-dimensional seismic data, the seismic horizon data is a two-dimensional array.

The executive subject of the multi-wave and multi-domain adaptive seismic horizon auto-tracking method illustrated in FIG. 1 may be a computer. As can be seen from the flow illustrated in FIG. 1, the multi-wave and multi-domain adaptive seismic horizon auto-tracking method according to the embodiment of the present disclosure firstly sets a seed point on seismic data, determines a seismic relative resolution according to a seismic waveform of a seismic trace where the seed point is located to further obtain horizon tracking parameters, determines a horizon point according to the seismic trace where the seed point is located and the horizon tracking parameters, replaces the seed point with the horizon point to perform corresponding iterative calculation, and finally combines horizon values corresponding to the plurality of horizon points into seismic horizon data and exports the seismic horizon data, which can significantly improve the precision and adaptability of horizon auto-tracking of different types of seismic data.

To sum up, the specific flow of the embodiment of the present disclosure is as follows:
1. importing seismic data and setting a seed point on the seismic data;
2. determining waveform extreme points according to a seismic waveform of a seismic trace where the seed point is located, and determining a seismic relative resolution according to a distance between the waveform extreme points;
3. determining horizon tracking parameters according to the seismic relative resolution, in which the horizon tracking parameters include a waveform feature point search window, a waveform similarity window and a waveform fitting window;
4. determining an adjacent seismic trace of the seismic trace where the seed point is located as a target seismic trace;
5. moving the target seismic trace within the waveform feature point search window, and determining a waveform length according to the waveform similarity window;
6. determining a waveform similarity between the seismic trace where the seed point is located and the target seismic trace corresponding to each movement according to the waveform length, to obtain a similarity sequence;
7. determining a movement amount corresponding to a maximum value in the similarity sequence as a waveform relative time difference;
8. performing curve fitting on the similarity sequence in the waveform fitting window centered on the seed point according to the waveform relative time difference to obtain a fitting curve, and determining a local maximum point of the fitting curve as the horizon point;
9. replacing the seed point with the horizon point, and returning to step 1 for corresponding iterative calculation to obtain a plurality of horizon points in one-to-one correspondence with the seismic traces in the seismic data; and
10. combining the horizon values corresponding to the plurality of horizon points into seismic horizon data and exporting the seismic horizon data.

To sum up, the parameter adaptive adjustment technology for the seismic waveform feature point search window controlled by the seismic relative resolution in the present disclosure can automatically estimate the seismic relative resolution and adaptively adjust the search window in the seismic horizon auto-tracking, without specifying the seismic horizon auto-tracking parameters in advance, which not only improves the precision of seismic horizon auto-tracking, but also significantly improves the adaptability of the seismic horizon auto-tracking algorithm, and which is suitable for not only conventional horizon auto-tracking of two-dimensional/three-dimensional, pre-stack/post-stack seismic data, but also the automatic pick-up of seismic first arrivals and tracking of spectral tuning curves during seismic, thereby significantly improving the precisions and adaptability of the horizon auto-tracking of different types of seismic data.

Based on the same inventive concept, an embodiment of the present disclosure further provides a multi-wave and multi-domain adaptive seismic horizon auto-tracking apparatus. Since the principle for the apparatus to solve the problem is similar to that for the multi-wave and multi-domain adaptive seismic horizon auto-tracking method, the implementation of the apparatus can refer to the implementation of the method, and the repeated content is omitted here.

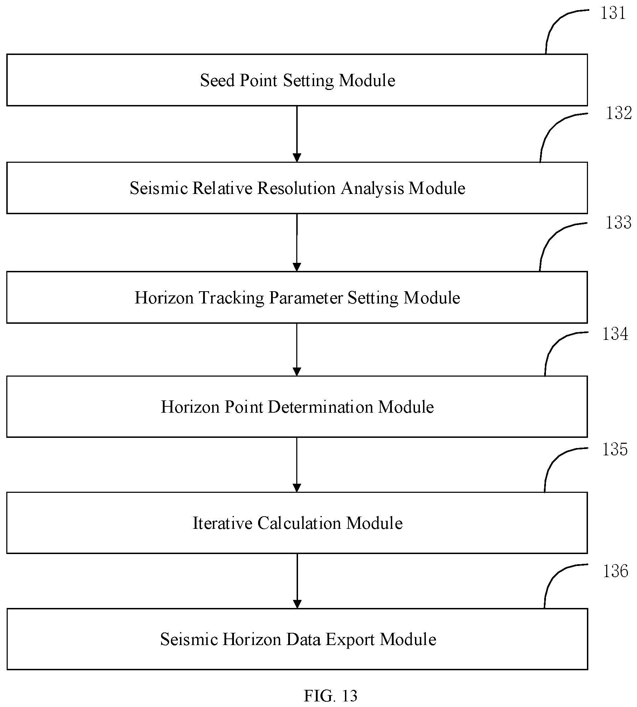

**FIG.** 13 illustrates a structural block diagram of a multi-wave and multi-domain adaptive seismic horizon auto-tracking apparatus according to an embodiment of the present disclosure. As illustrated in FIG. 13, the multi-wave and multi-domain adaptive seismic horizon auto-tracking apparatus includes:
a seed point setting module 131 configured to import seismic data and set a seed point on the seismic data;
a seismic relative resolution analysis module 132 configured to determine a seismic relative resolution according to a seismic waveform of a seismic trace where the seed point is located;
a horizon tracking parameter setting module 133 configured to determine horizon tracking parameters according to the seismic relative resolution;
a horizon point determination module 134 configured to determine a horizon point according to the seismic trace where the seed point is located and the horizon tracking parameters;
an iterative calculation module 135 configured to replace the seed point with the horizon point, and performing corresponding iterative calculation to obtain a plurality of horizon points in one-to-one correspondence with the seismic traces in the seismic data; and
a seismic horizon data export module 136 configured to combine horizon values corresponding to the plurality of horizon points into seismic horizon data and export the seismic horizon data.

In an embodiment, the seismic relative resolution analysis module includes:
a waveform extreme point determination unit configured to determine waveform extreme points according to the seismic waveform of the seismic trace where the seed point is located; and
a seismic relative resolution analysis unit configured to determine the seismic relative resolution according to a distance between the waveform extreme points.

In an embodiment, the horizon point determination module includes:
**a** waveform relative time difference calculation unit configured to determine a waveform relative time difference according to the seismic trace where the seed point is located and the horizon tracking parameters; and
**a** horizon point determination unit configured to determine the horizon point according to the horizon tracking parameters and the waveform relative time difference.
In an embodiment, the horizon tracking parameters include a waveform feature point search window and a waveform similarity window;
the waveform relative time difference calculation unit includes:
a target seismic trace determination subunit configured to determine an adjacent seismic trace of the seismic trace where the seed point is located as a target seismic trace;
a similarity calculation subunit configured to move the target seismic trace in the waveform feature point search window, determine a waveform similarity between the seismic trace where the seed point is located and the target seismic trace corresponding to each movement according to the waveform similarity window, to obtain a similarity sequence; and
a waveform relative time difference calculation subunit configured to determine a movement amount corresponding to a maximum value in the similarity sequence as the waveform relative time difference.

In an embodiment, the similarity calculation subunit is specifically configured to:
determine a waveform length according to the waveform similarity window; and
determine the waveform similarity between the seismic trace where the seed point is located and the target seismic trace corresponding to each movement according to the waveform length.

In an embodiment, the horizon tracking parameters further include a waveform fitting window;
the horizon point determination unit is specifically configured to:
perform curve fitting on the similarity sequence in the waveform fitting window according to the waveform relative time difference to obtain a fitting curve, and determine a local maximum point of the fitting curve as the horizon point.

To sum up, the multi-wave and multi-domain adaptive seismic horizon auto-tracking apparatus according to the embodiment of the present disclosure firstly sets a seed point on seismic data, determines a seismic relative resolution according to a seismic waveform of a seismic trace where the seed point is located to further obtain horizon tracking parameters, determines a horizon point according to the seismic trace where the seed point is located and the horizon tracking parameters, replaces the seed point with the horizon point to perform corresponding iterative calculation, and finally combines horizon values corresponding to a plurality of horizon points into seismic horizon data and exports the seismic horizon data, which can significantly improve the precision and adaptability of horizon auto-tracking of different types of seismic data.

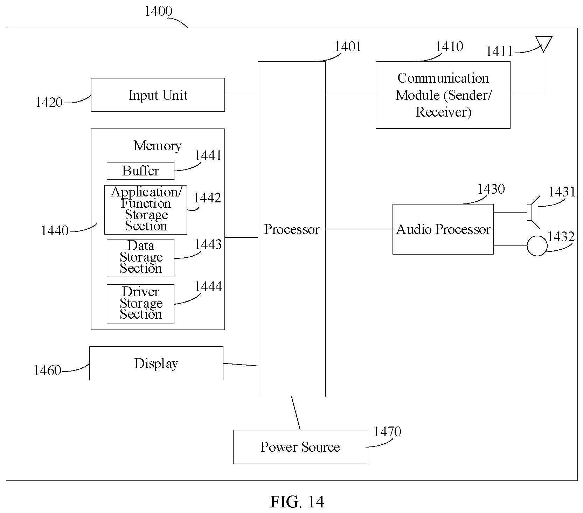

FIG. 14 illustrates a schematic block diagram of a system configuration of an electronic device 1400 according to an embodiment of the present disclosure. As illustrated in FIG. 14, the electronic device 1400 may include a Central Processing Unit (CPU) 1401 and a memory 1440, the memory 1440 is coupled to the CPU 1401. To be noted, FIG. 14 is exemplary, and any other type of structure may also be used to supplement or replace the above structure to realize a telecommunication function or other functions.

**In** an embodiment, the functions of the multi-wave and multi-domain adaptive seismic horizon auto-tracking method may be integrated into the CPU 1401. In this embodiment, the CPU 1401 may be configured to control as follows:
importing seismic data, and setting a seed point on the seismic data;
determining a seismic relative resolution according to a seismic waveform of a seismic trace where the seed point is located;
determining horizon tracking parameters according to the seismic relative resolution;
determining a horizon point according to the seismic trace where the seed point is located and the horizon tracking parameters;
replacing the seed point with the horizon point, and performing corresponding iterative calculation to obtain a plurality of horizon points in one-to-one correspondence with the seismic traces in the seismic data; and
combining horizon values corresponding to the plurality of horizon points into seismic horizon data and exporting the seismic horizon data.

As can be seen from the above description, the multi-wave and multi-domain adaptive seismic horizon auto-tracking device of the present disclosure firstly sets a seed point on seismic data, determines a seismic relative resolution according to a seismic waveform of a seismic trace where the seed point is located to further obtain horizon tracking parameters, determines a horizon point according to the seismic trace where the seed point is located and the horizon tracking parameters, replaces the seed point with the horizon point to perform corresponding iterative calculation, and finally combines horizon values corresponding to a plurality of horizon points into seismic horizon data and exports the seismic horizon data, which can significantly improve the precision and adaptability of horizon auto-tracking of different types of seismic data.

In another embodiment, the multi-wave and multi-domain adaptive seismic horizon auto-tracking apparatus may be configured separately from the CPU 1401. For example, the multi-wave and multi-domain adaptive seismic horizon auto-tracking apparatus may be configured as a chip connected to the CPU 1401, so as to realize the functions of the multi-wave and multi-domain adaptive seismic horizon auto-tracking method through the control of the CPU.

**As** illustrated in FIG. 14, the electronic device 1400 may further include a communication module 1410, an input unit 1420, an audio processor 1430, a display 1460, and a power source 1470. To be noted, the electronic device 1400 does not necessarily include all the components illustrated in FIG. 14. In addition, the electronic device 1400 may further include components not illustrated in FIG. 14, and reference can be made to the prior art.

As illustrated in FIG. 14, the CPU 1401, sometimes called a controller or an operation control component, may include a microprocessor or any other processor device and/or logic device. The CPU 1401 receives an input and controls the operations of various components of the electronic device 1400.

In this embodiment, the memory 1440 may be, for example, one or more of a buffer, a flash memory, a hard drive, a removable medium, a volatile memory, a nonvolatile memory or any other suitable device. The memory 1440 may store information related to a failure, and may further store a program of information related to execution. In addition, the CPU 1401 can execute the program stored in the memory 1440 to realize information storage, processing, etc.

The input unit 1420 provides an input to the CPU 1401. The input unit 1420 is, for example, a key or a touch input device. The power source 1470 is configured to supply power to the electronic device 1400. The display 1460 is configured to display an object to be displayed, such as an image or a text. The display may be, for example, an LCD display, but is not limited thereto.

The memory 1440 may be a solid-state memory, such as a read only memory (ROM), a random-access memory (RAM), a SIM card, etc. The memory 1440 may also be a memory that holds information even when power is off, and can be selectively erased and provided with more data. An example of the memory 1440 is sometimes called an EPROM, etc. The memory 1440 may also be some other type of device. The memory 1440 includes a buffer memory 1441 (also called a buffer). The memory 1440 may include an application/function storage section 1442 configured to store application programs and function programs or execute an operation flow of the electronic device 1400 by the CPU 1401.

The memory 1440 may further include a data storage section 1443 which stores data, such as contacts, number data, pictures, sounds and/or any other data used by the electronic device. A driver storage section 1444 of the memory 1440 may include various drivers for the communication function and/or for executing other functions (e.g., messaging application, address book application, etc.) of the electronic device.

The communication module 1410 is a sender/receiver 1410 which sends and receives signals via an antenna 1411. The communication module (sender/receiver) 1410 is coupled to the CPU 1401 to provide an input signal and receive an output signal, which may be the same as the case of a conventional mobile communication terminal.

Based on different communication technologies, a plurality of communication modules 1410, such as a cellular network module, a Bluetooth module and/or a wireless local area network module, may be provided in a same one electronic device. The communication module (sender/ receiver) 1410 is further coupled to a speaker 1431 and a microphone 1432 via an audio processor 1430 to provide an audio output via the speaker 1431 and receive an audio input from the microphone 1432, thereby realizing the general telecommunications function. The audio processor 1430 may include any suitable buffer, decoder, amplifier, etc. In addition, the audio processor 1430 is further coupled to the CPU 1401, so that audios can be recorded locally through the microphone 1432 and sound stored locally can be played through the speaker 1431.

An embodiment of the present disclosure may further provide a computer-readable storage medium capable of implementing all the steps of the multi-wave and multi-domain adaptive seismic horizon auto-tracking method with the executive subject of a server or a client in the above embodiments. The computer-readable storage medium stores a computer program, which when executed by a processor implements all the steps of the multi-wave and multi-domain adaptive seismic horizon auto-tracking method in the above embodiments. For example, the following steps are implemented when the processor executes the computer program:
importing seismic data, and setting a seed point on the seismic data;
determining a seismic relative resolution according to a seismic waveform of a seismic trace where the seed point is located;
determining horizon tracking parameters according to the seismic relative resolution;
determining a horizon point according to the seismic trace where the seed point is located and the horizon tracking parameters;
replacing the seed point with the horizon point, and performing corresponding iterative calculation to obtain a plurality of horizon points in one-to-one correspondence with the seismic traces in the seismic data; and
combining horizon values corresponding to the plurality of horizon points into seismic horizon data and exporting the seismic horizon data.

To sum up, the computer-readable storage medium of the present disclosure firstly sets a seed point on seismic data, determines a seismic relative resolution according to a seismic waveform of a seismic trace where the seed point is located to further obtain horizon tracking parameters, determines a horizon point according to the seismic trace where the seed point is located and the horizon tracking parameters, replaces the seed point with the horizon point to perform corresponding iterative calculation, and finally combines horizon values corresponding to a plurality of horizon points into seismic horizon data and exports the seismic horizon data, which can significantly improve the precision and adaptability of horizon auto-tracking of different types of seismic data.

An embodiment of the present disclosure may further provide a computer program product capable of implementing all the steps of the multi-wave and multi-domain adaptive seismic horizon auto-tracking method with the executive subject of a server or a client in the above embodiments. The computer program product includes a computer program/instruction, which when executed by a processor, implements all the steps of the multi-wave and multi-domain adaptive seismic horizon auto-tracking method in the above embodiments. For example, the following steps are implemented when the computer program is executed by a processor:
importing seismic data, and setting a seed point on the seismic data;
determining a seismic relative resolution according to a seismic waveform of a seismic trace where the seed point is located;
determining horizon tracking parameters according to the seismic relative resolution;
determining a horizon point according to the seismic trace where the seed point is located and the horizon tracking parameters;
replacing the seed point with the horizon point, and performing corresponding iterative calculation to obtain a plurality of horizon points in one-to-one correspondence with the seismic traces in the seismic data; and
combining horizon values corresponding to the plurality of horizon points into seismic horizon data and exporting the seismic horizon data.

To sum up, the computer program product of the present disclosure firstly sets a seed point on seismic data, determines a seismic relative resolution according to a seismic waveform of a seismic trace where the seed point is located to further obtain horizon tracking parameters, determines a horizon point according to the seismic trace where the seed point is located and the horizon tracking parameters, replaces the seed point with the horizon point to perform corresponding iterative calculation, and finally combines horizon values corresponding to a plurality of horizon points into seismic horizon data and exports the seismic horizon data, which can significantly improve the precision and adaptability of horizon auto-tracking of different types of seismic data.

The embodiments of the present disclosure are all described in a progressive manner, and the same or similar portions of the embodiments can refer to each other. Each embodiment lays an emphasis on its distinctions from other embodiments. In particular, an embodiment of hardware and program is simply described since it is substantially similar to the method embodiment, and please refer to the descriptions of the method embodiment for the relevant parts.

The specific embodiments of the present disclosure have been described above, and other embodiments are within the scope of the appended claims. In some cases, the actions or steps recited in the claims may be performed in a different order than in the embodiments and still achieve the desired results. In addition, the processes depicted in the drawings do not necessarily require a specific order illustrated or a consecutive order to achieve the desired results. In some embodiments, multitasking and parallel processing are also possible or may be advantageous.

Although the present disclosure provides the methodical operation steps as described in the embodiments or the flowcharts, more or fewer operation steps may be included based on the conventional or non-inventive labor. The step execution order listed in the embodiments is only one of many step execution orders and does not represent a unique execution order. In case of an actual device or terminal product, the steps may be executed orderly or in parallel (e.g., by the parallel processors, or under a multi-thread processing environment) according to the method illustrated in the embodiments or the drawings.

Although the embodiments of the present disclosure provide methodical operation steps as described in the embodiments or the flowcharts, more or fewer operation steps may be included based on the conventional or non-inventive means. The step execution order listed in the embodiments is only one of many step execution orders and does not represent a unique execution order. In case of an actual device or terminal product, the steps may be executed orderly or in parallel (e. g., by the parallel processors, or under a multi-thread processing environment or even a distributed data processing environment) according to the method illustrated in the embodiments or the drawings. The term 'comprise', 'include' or any other variant is intended to cover the non-exclusive inclusions, so that a process, a method, a product or a device including a series of elements include not only those elements, but also other elements not explicitly listed, or further include inherent elements of such process, method, product or device. In a case where there is no further limitation, it is not excluded that there are other identical or equivalent elements in the process, method, product or device including the elements.

For the convenience of description, the device is described based on the functions through various functional modules, respectively. Of course, during implementation of the embodiments of the present disclosure, the functions of the modules may be realized in the same or a plurality of software and/or hardware, or a module that realizes a function may be implemented by a combination of a plurality of submodules or subunits, and the like. The device embodiments described above are merely illustrative, e.g., the unit partitioning is only a logical function partitioning, and other partitioning modes are possible during the actual implementation. For example, a plurality of units or components may be combined or integrated into another system, or some features may be omitted or not executed. In addition, the mutual coupling or direct coupling or communication connection illustrated or discussed may be through some interfaces, and means or units of indirect coupling or communication connection may be in electrical, mechanical or other forms.

As known to persons skilled in the art, in addition to implementing the controller by merely using computer readable program codes, the controller is completely enabled to realize the same function in the form of a logic gate, a switch, an Application Specific Integrated Circuit, a programmable logic controller, an embedded microcontroller, etc., by logically programming the methodical steps. Thus, such a controller may be deemed as a hardware component, and means included therein for realizing various functions may also be deemed as structures in the hardware component. Alternatively, those means for realizing various functions may even be deemed as not only software modules for implementing a method, but also the structures in the hardware component.

The present disclosure is described with reference to a flowchart and/or a block diagram of the method, apparatus (system) and computer program product according to the embodiments of the present disclosure. It shall be appreciated that each flow and/or block in the flowchart and/or the block diagram and a combination of flows and/or blocks in the flowchart and/or the block diagram can be realized by computer program instructions. Those computer program instructions can be provided to a general computer, a dedicated computer, an embedded processor or a processor of other programmable data processing device to produce a machine, so that the instructions executed by the processor of the computer or other programmable data processing device produce means for realizing specified functions in one or more flows in the flowchart and/or one or more blocks in the block diagram.

These computer program instructions may also be stored in a computer readable memory capable of guiding the computer or other programmable data processing devices to work in a particular manner, so that the instructions stored in the computer readable memory can produce manufacture articles including an instructing device which realizes function(s) specified in one or more flows in the flowchart and/or one or more blocks in the block diagram.

These computer program instructions may also be loaded onto the computer or other programmable data processing devices, so that a series of operation steps are performed on the computer or other programmable data processing devices to produce a processing realized by the computer, thus the instructions executed on the computer or other programmable devices provide step(s) for realizing function(s) specified in one or more flows in the flowchart and/or one or more blocks in the block diagram.

In a typical configuration, the computing device includes one or more processors (CPUs), an input/output interface, a network interface and a memory.

The memory may have the form of a volatile memory, a Random-Access Memory (RAM) and/or a nonvolatile memory, such as Read-Only Memory (ROM) or a flash RAM, etc. among the computer readable medium. The memory is an example of the computer readable medium.

The computer-readable medium includes permanent and non-permanent, removable and non-removable media, which can realize the information storage in any method or technique. The information can be computer readable instructions, data structures, program modules or other data. An example of the computer storage medium includes, but not limited to, a phase change memory (PRAM), a static random access memory (SRAM), a dynamic random access memory (DRAM), other types of random access memory (RAM), a read-only memory (ROM), an electrically-erasable programmable read-only memory (EEPROM), a flash memory or other memory techniques, a compact disk read only memory (CD-ROM), a digital versatile disc (DVD) or other optical storages, magnetic cassette tapes, magnetic diskettes or other magnetic storage device or any other non-transmission medium, which can be used for storing the information accessible to a computing device. According to the definitions herein, the computer readable medium does not include any temporary computer readable media (transitory media), such as modulated data signal and carrier wave.

Persons skilled in the art should appreciate that any embodiment of the present disclosure can be provided as a method, a system or a computer program product. Therefore, the present disclosure can take the form of a full hardware embodiment, a full software embodiment, or an embodiment combining software and hardware. Moreover, the present invention can take the form of a computer program product implemented on one or more computer usable storage mediums (including, but not limited to, a magnetic disc memory, CD-ROM, optical storage, etc.) containing therein computer usable program codes.

The embodiments of the present disclosure may be described in the general context of computer executable instructions executed by the computer, e.g., the program module. In general, the program module includes routine, program, object, component, data structure, etc. executing a particular task or realizing a particular abstract data type. The embodiments of the present disclosure may also be put into practice in the distributed computing environments where tasks are executed by remote processing devices connected through a communication network. In the distributed computing environments, the program modules may be located in the local and remote computer storage medium including the storage device therein.

The embodiments of the present disclosure are all described in a progressive manner, and the same or similar portions of the embodiments can refer to each other. Each embodiment lays an emphasis on its distinctions from other embodiments. In particular, the system embodiment is simply described since it is substantially similar to the method embodiment, and please refer to the descriptions of the method embodiment for the relevant parts. In the description of the present disclosure, the description of reference terms 'an embodiment', 'some embodiments', 'an example', 'a specific example' or `some examples' and the like mean that the specific features, structures, materials, or characteristics described in conjunction with the embodiment(s) or example(s) are included in at least one embodiment or example of the present disclosure. In the present disclosure, the schematic expressions of the above terms do not necessarily aim at the same embodiment or example. Moreover, the specific features, structures, materials, or characteristics described may be combined in any one or more embodiments or examples in a suitable manner. In addition, persons skilled in the art may combine and assemble different embodiments or examples, and features thereof described in the present disclosure, if there is no contradiction.

Those described above are just examples of the embodiments of the present disclosure, rather than limitations thereto. For those skilled in the art, various amendments or variations may be made to the embodiments of the present disclosure. Any amendment, equivalent substitution, improvement, etc. within the spirit and principle of the present disclosure should fall within the scope of the claims.

## Claims

1. A multi-wave and multi-domain adaptive seismic horizon auto-tracking method, comprising:
importing seismic data, and setting a seed point on the seismic data;
determining a seismic relative resolution according to a seismic waveform of a seismic trace where the seed point is located;
determining horizon tracking parameters according to the seismic relative resolution;
determining a horizon point according to the seismic trace where the seed point is located and the horizon tracking parameters;
replacing the seed point with the horizon point, and performing corresponding iterative calculation to obtain a plurality of horizon points in one-to-one correspondence with the seismic traces in the seismic data; and
combining horizon values corresponding to the plurality of horizon points into seismic horizon data and exporting the seismic horizon data.

2. The multi-wave and multi-domain adaptive seismic horizon auto-tracking method according to claim 1, wherein the determining the seismic relative resolution according to the seismic waveform of the seismic trace where the seed point is located comprises:
determining waveform extreme points according to the seismic waveform of the seismic trace where the seed point is located; and
determining the seismic relative resolution according to a distance between the waveform extreme points.

3. The multi-wave and multi-domain adaptive seismic horizon auto-tracking method according to claim 1, wherein the determining the horizon point according to the seismic trace where the seed point is located and the horizon tracking parameters comprises:
determining a waveform relative time difference according to the seismic trace where the seed point is located and the horizon tracking parameters; and
determining the horizon point according to the horizon tracking parameters and the waveform relative time difference.

4. The multi-wave and multi-domain adaptive seismic horizon auto-tracking method according to claim 3, wherein the horizon tracking parameters comprise a waveform feature point search window and a waveform similarity window;
the determining the waveform relative time difference according to the seismic trace where the seed point is located and the horizon tracking parameters comprises:
determining an adjacent seismic trace of the seismic trace where the seed point is located as a target seismic trace;
moving the target seismic trace within the waveform feature point search window, and determining a waveform similarity between the seismic trace where the seed point is located and the target seismic trace corresponding to each movement according to the waveform similarity window to obtain a similarity sequence; and
determining a movement amount corresponding to a maximum value in the similarity sequence as the waveform relative time difference.

5. The multi-wave and multi-domain adaptive seismic horizon auto-tracking method according to claim 4, wherein the determining the waveform similarity between the seismic trace where the seed point is located and the target seismic trace corresponding to each movement according to the waveform similarity window comprises:
determining a waveform length according to the waveform similarity window; and
determining the waveform similarity between the seismic trace where the seed point is located and the target seismic trace corresponding to each movement according to the waveform length.

6. The multi-wave and multi-domain adaptive seismic horizon auto-tracking method according to claim 4, wherein the horizon tracking parameters further comprise a waveform fitting window;
the determining the horizon point according to the horizon tracking parameters and the waveform relative time difference comprises:
performing curve fitting on the similarity sequence in the waveform fitting window according to the waveform relative time difference to obtain a fitting curve, and determining a local maximum point of the fitting curve as the horizon point.

7. A multi-wave and multi-domain adaptive seismic horizon auto-tracking apparatus, comprising:
a seed point setting module configured to import seismic data and set a seed point on the seismic data;
a seismic relative resolution analysis module configured to determine a seismic relative resolution according to a seismic waveform of a seismic trace where the seed point is located;
a horizon tracking parameter setting module configured to determine horizon tracking parameters according to the seismic relative resolution;
a horizon point determination module configured to determine a horizon point according to the seismic trace where the seed point is located and the horizon tracking parameters;
an iterative calculation module configured to replace the seed point with the horizon point, and performing corresponding iterative calculation to obtain a plurality of horizon points in one-to-one correspondence with the seismic traces in the seismic data; and
a seismic horizon data export module configured to combine horizon values corresponding to the plurality of horizon points into seismic horizon data and export the seismic horizon data.

8. The multi-wave and multi-domain adaptive seismic horizon auto-tracking apparatus according to claim 7, wherein the seismic relative resolution analysis module comprises:
a waveform extreme point determination unit configured to determine waveform extreme points according to the seismic waveform of the seismic trace where the seed point is located; and
a seismic relative resolution analysis unit configured to determine the seismic relative resolution according to a distance between the waveform extreme points.

9. The multi-wave and multi-domain adaptive seismic horizon auto-tracking apparatus according to claim 7, wherein the horizon point determination module comprises:
a waveform relative time difference calculation unit configured to determine a waveform relative time difference according to the seismic trace where the seed point is located and the horizon tracking parameters; and
a horizon point determination unit configured to determine the horizon point according to the horizon tracking parameters and the waveform relative time difference.

10. The multi-wave and multi-domain adaptive seismic horizon auto-tracking apparatus according to claim 9, wherein the horizon tracking parameters comprise a waveform feature point search window and a waveform similarity window;
the waveform relative time difference calculation unit comprises:
a target seismic trace determination subunit configured to determine an adjacent seismic trace of the seismic trace where the seed point is located as a target seismic trace;
a similarity calculation subunit configured to move the target seismic trace in the waveform feature point search window, determine a waveform similarity between the seismic trace where the seed point is located and the target seismic trace corresponding to each movement according to the waveform similarity window to obtain a similarity sequence; and
a waveform relative time difference calculation subunit configured to determine a movement amount corresponding to a maximum value in the similarity sequence as the waveform relative time difference.

11. The multi-wave and multi-domain adaptive seismic horizon auto-tracking apparatus according to claim 10, wherein the similarity calculation subunit is configured to:
determine a waveform length according to the waveform similarity window; and
determine the waveform similarity between the seismic trace where the seed point is located and the target seismic trace corresponding to each movement according to the waveform length.

12. The multi-wave and multi-domain adaptive seismic horizon auto-tracking apparatus according to claim 10, wherein the horizon tracking parameters further comprise a waveform fitting window;
the horizon point determination unit is configured to:
perform curve fitting on the similarity sequence in the waveform fitting window according to the waveform relative time difference to obtain a fitting curve, and determine a local maximum point of the fitting curve as the horizon point.

13. An electronic device, comprising a memory, a processor and a computer program stored in the memory and executed on the processor, wherein when executing the computer program, the processor implements the steps of the multi-wave and multi-domain adaptive seismic horizon auto-tracking method according to any one of claims 1 to 6.

14. A computer-readable storage medium, storing a computer program, wherein when executed by a processor, the computer program implements the steps of the multi-wave and multi-domain adaptive seismic horizon auto-tracking method according to any one of claims 1 to 6.

15. A computer program product, comprising a computer program/instruction, wherein when executed by a processor, the computer program/instruction implements the steps of the multi-wave and multi-domain adaptive seismic horizon auto-tracking method according to any one of claims 1 to 6.
